# FASCICULE DE BREVET EUROPEEN

(11) **EP 3 913 253 B1**
(45) Date de publication et mention de la délivrance du brevet: **09.11.2022**
(21) Numéro de dépôt: 21175275.3
(22) Date de dépôt: 21.05.2021
(51) Int. Cl.: F16G 11/10, F16G 11/14, F16G 11/04, A01G 17/06

(54) **CROCHET POUR TENDEUR ELASTIQUE ET TENDEUR LE COMPORTANT**
HAKEN FÜR ELASTISCHEN SPANNER UND SPANNER MIT DIESEM HAKEN
CLASP FOR ELASTIC TENSIONER AND TENSIONER COMPRISING SAME

(30) Priorité: 21.05.2020 FR 2005399
(43) Date de publication de la demande: 24.11.2021
(73) Titulaire: Le Gallou, Alexandra, 47320 Clairac (FR); Barre, Benoît, 47500 Monsempron-Libos (FR)
(72) Inventeur: Le Gallou, Alexandra, 47320 Clairac (FR); Barre, Benoît, 47500 Monsempron-Libos (FR)
(74) Mandataire: Argyma

(56) Documents cités:
- WO-A1-2009/018611
- CZ-U1- 1 030
- JP-U- H0 332 237
- NL-A- 1 039 605
- NL-C2- 1 039 605
- US-A- 4 745 663

## Description

### Domaine technique

La présente invention est du domaine des matériels utilisés pour assembler des éléments l'un à l'autre de manière détachable et se rapporte à des perfectionnements à des tendeurs élastiques du genre "Sandow".

Plus particulièrement, la présente invention se rapporte à un crochet pour notamment tendeur élastique et à un tendeur élastique comportant ce nouveau genre de crochet.

### État de la technique antérieure

Typiquement, les tendeurs élastiques sont formés d'un câble élastique recevant à chaque extrémité un crochet de fixation. Habituellement, le câble élastique comporte à chaque extrémité une agrafe métallique et chaque crochet, formé à partir d'un élément filaire rigide, comporte une boucle ouverte d'accrochage prolongeant une interface de liaison sous forme de spirale conique dans laquelle est engagée et bloquée par l'agrafe correspondante, l'une des deux extrémités du câble élastique.

Le mode de blocage par agrafe du câble élastique dans les crochets interdit et pour le moins rend difficile toute modification de la longueur utile du câble. Pour cette raison, les fabricants proposent à la vente des tendeurs de différentes longueurs standardisées qui ne sont pas, la plupart du temps, adaptés à l'utilisation envisagée. Un autre inconvénient de ce mode de blocage réside dans la difficulté de remplacer un câble élastique endommagé. Cela s'explique par la nécessité de posséder des agrafes appropriées et des moyens adéquats de sertissage de ces dernières sur le câble. Pour cette raison, un endommagement du câble se traduit en règle générale par la mise au rebut du tendeur avec ses crochets.

Antérieurement, plusieurs solutions visant à modifier de manière simple la longueur du câble élastique ont été mises en oeuvre. Ainsi, on connaît du document FR 2919905 un crochet dont la zone postérieure comporte un alésage dans lequel est introduit et replié, un câble élastique. L'alésage comporte des moyens de retenue du câble dans l'alésage. Une telle disposition permet un réglage rapide de la longueur du câble, mais la réalisation d'un tel crochet est relativement coûteuse.

De plus la plupart des tendeurs connus présentent le risque d'un décrochage intempestif. Pour pallier ce problème diverses solutions ont été mises en œuvre. Ainsi, le document FR 1 028 233 enseigne l'usage d'un ressort à boudin enfilé de manière coulissante sur la boucle pour en dégager ou obturer l'ouverture de la boucle. Cette solution se révèle imparfaite, le ressort à boudin, en raison de son élasticité ne s'opposant que très partiellement à l'ouverture de la boucle d'accrochage.

Le document FR 2 465 114 montre un tendeur du genre "Sandow" dont les crochets d'extrémité sont agencés en mousqueton. Cette solution s'oppose efficacement au décrochage intempestif du crochet, mais demeure relativement coûteuse. Ce crochet est réalisé en matière synthétique et le mousqueton, formé d'un bras, est enraciné au corps du crochet. Pour cette raison, l'ouverture de la boucle que forme le crochet est obtenue par déformation élastique du mousqueton. Ce dernier est rappelé en position de fermeture de la boucle sous l'effet de forces élastiques internes. En cas d'usage répété, cette disposition peut conduire à une déformation permanente du mousqueton voire à sa rupture sous l'effet d'une fatigue prononcée.

Un crochet agencé en mousqueton, pour tendeur élastique, est également décrit dans FR 2 492 916. Ce crochet comporte un corps de crochet auquel sont fixés un câble élastique et une boucle formée par deux branches liées l'une à l'autre dont une est fixée au corps de crochet et dont l'autre comporte une extrémité libre agencée en moyen d'accrochage. Ce moyen d'accrochage est prévu pour coopérer avec un moyen d'accrochage complémentaire formé sur le corps de crochet. Un tel crochet est réalisé par moulage d'un matériau de synthèse.

On connaît également du JP H03 32237 un crochet pour dispositif antidérapant pour pneumatique, selon le préambule de la première revendication. Un tel crochet comporte une boucle ouverte à une extrémité et une interface en S à l'opposé, équipée d'une bague de blocage du câble. Le câble ne peut pas être fixé de manière efficace à ce crochet sans la présence de cette bague. En outre, compte tenu de son champ d'application, ce crochet n'est pas prévu pour recevoir des câbles élastiques.

Les crochets de l'état de la technique, essentiellement ceux prévus pour recevoir en fixation un câble élastique et ce de manière détachable, ne comportent pas de moyens pour maintenir ce câble élastique dans une position adéquate de sorte que ce dernier peut, dans certaines situations, se détacher accidentellement de ce crochet.

Une des applications des tendeurs élastiques est la fixation des filets de protection d'arbres fruitiers les uns aux autres ou à des structures appropriées. Ces filets sont tendus au-dessus de la canopée de ces arbres et assurent une protection contre les intempéries, notamment la grêle. Leur fixation à l'aide de tendeurs élastiques permet leur affaissement et leur écartement sous l'effet d'une charge importante afin de libérer des ouvertures de déversement se situant habituellement au-dessus des inter-rangs. De cette manière on protège les arbres fruitiers et on réduit les risques de détérioration de ces filets. Habituellement, ces tendeurs élastiques demeurent sur l'installation de protection pendant plusieurs mois, voire plusieurs années et à la longue, leur câble élastique perd ses propriétés d'élasticité et se détériore. Là encore, dans cette situation, ces tendeurs usagés sont mis au rébus alors que seul leur câble élastique est détérioré.

### Exposé de l'invention

La présente invention a pour objet de pallier les inconvénients précédemment cités en proposant un crochet pour tendeur élastique d'une réalisation simple et peu coûteuse, conçu de manière à écarter le risque de tout décrochage intempestif et assurant un maintien adéquat du câble élastique par rapport au crochet pour éviter toute désolidarisation accidentelle dudit câble. Un autre but de la présente invention est la mise en œuvre d'un crochet conçu de manière à faciliter un remplacement aisé du câble élastique et ce sans outillage ni accessoire. Un autre but de la présente invention est la mise en œuvre d'un crochet conçu de manière à permettre un réglage aisé de la longueur utile du câble élastique et ce sans outil et accessoire.

À cet effet le crochet selon l'invention pour tendeur élastique, réalisé par pliage d'un élément filaire métallique rigide, de section adaptée, présentant d'une part, une interface de liaison prévue pour recevoir en fixation, de manière amovible, l'une des zones terminales d'un câble élastique et, d'autre part, une boucle d'accrochage prévue pour être accrochée à un objet, ladite boucle possédant une zone terminale libre et déterminant une anse prévue pour recevoir ledit objet par passage au travers d'une ouverture, l'interface de liaison présentant une première et une seconde branches terminales rectilignes et une branche médiane rectiligne, liée à la première branche terminale rectiligne par une première branche coudée et à la seconde branche terminale rectiligne par une seconde branche coudée, lesdites branches coudées formant deux creux opposés, lesdites branches rectilignes terminales et médiane étant parallèles à la direction de l'effort de traction que devra encaisser tant la boucle que l'interface de liaison du fait de l'action du câble élastique, la première branche terminale rectiligne étant prolongée par la boucle d'accrochage, et la première branche coudée, déterminant un creux orienté vers l'anse, en relation de communication avec cette dernière, ladite première branche coudée et le creux qu'elle forme étant prévus pour recevoir en fixation le câble élastique, se caractérise essentiellement en ce que la largeur du creux formé par au moins la première branche coudée est égale ou inférieure au diamètre du câble prévu pour être fixé à l'interface de liaison, et que la seconde branche terminale rectiligne est prolongée par une queue de contention prévue pour recevoir le câble élastique, ladite queue de contention présentant un axe géométrique longitudinal AA' parallèle aux branches rectilignes terminales et médiane.

Ainsi, le câble élastique se trouvera radialement comprimé dans le creux de la première branche coudée et sera maintenu dans une position adéquate par rapport à cette dernière par la queue de contention, ce qui après nouage du câble écartera le risque d'une désolidarisation accidentelle. De plus, ces dispositions facilitent la fixation du câble élastique à l'interface de liaison ainsi que le réglage de la longueur utile dudit câble.

L'effort de traction exercé par le câble sur la première branche coudée contribuera à accroître son degré de fixation à cette branche coudée et ce de manière pérenne. Ainsi, tout relâchement de cet effort n'altérera pas le degré de fixation de ce câble à l'interface de liaison.

Selon une autre caractéristique de l'invention, la queue de contention présente une succession de spires, déterminant un logement prévu pour recevoir un câble élastique, l'axe géométrique de révolution des dites spires formant l'axe longitudinal AA' de ladite queue de contention.

Selon une autre caractéristique de l'invention, l'axe longitudinal AA' de la queue de contention est sécant à la première branche coudée.

Selon une autre caractéristique de l'invention, la boucle d'accrochage comporte une branche basale prolongeant la première branche rectiligne de l'interface de liaison et la zone terminale libre de la boucle d'accrochage est agencée en fermoir, l'ouverture de l'anse étant refermée par blocage du fermoir dans le creux que forme la seconde branche coudée. On conçoit qu'une telle solution d'une mise en œuvre simple et peu coûteuse s'oppose efficacement à la désolidarisation de la boucle.

Selon une autre caractéristique de l'invention, la boucle d'accrochage comprend une branche arquée élastique prolongeant la branche basale et déterminant avec cette dernière l'anse de ladite boucle, la zone terminale libre de la branche arquée formant la zone terminale libre de ladite boucle et étant agencée en fermoir.

Selon une autre caractéristique de l'invention, le fermoir est conformé en bec d'accrochage.

Selon une autre caractéristique de l'invention, caractérisé en ce que la branche arquée de la boucle d'accrochage est prolongée au-delà de l'interface de liaison et de la queue de contention et coopère en fermeture de la boucle d'accrochage, avec ladite queue de contention.

Selon une autre caractéristique de l'invention, la queue de contention présente à l'opposé de l'interface de liaison une zone terminale libre se développant selon un plan géométrique normal ou oblique par rapport à l'axe géométrique longitudinal AA', et comportant en extrémité un bec de rétention courbé en U, dont la concavité est orientée vers la branche arquée, ledit bec de rétention étant prévu pour recevoir la branche arquée en position de fermeture de la boucle d'accrochage.

Selon une autre caractéristique de l'invention, le fermoir, ménagé en extrémité de la branche arquée, est situé en arrière et à écartement du bec de rétention, lorsque la branche arquée est engagée dans ce dit bec de rétention.

La présente invention a également pour objet un tendeur élastique formé d'un câble élastique à chaque extrémité duquel est fixé un crochet selon l'invention.

Selon une autre caractéristique de l'invention, le câble est engagé transversalement dans le creux que forme la première branche coudée en laissant subsister au-delà dudit creux, un brin mort de faible longueur, puis est engagé transversalement dans le creux que forme la seconde branche coudée tout en entourant la branche médiane, est ramené dans le creux que forme la première branche coudée et est ensuite engagé dans la queue de contention.

Cette disposition assure une fixation ferme du câble à l'interface de liaison et permet le réglage la longueur utile du câble et son remplacement. De plus, le degré de serrage du câble sur l'interface de liaison se trouve augmenté par l'effort de tension appliqué au câble. Ainsi est obtenu d'une manière particulièrement simple un effet d'auto-serrage du câble élastique sur l'interface de liaison. Enfin, l'engagement du câble dans la queue de contention assure le maintien de ce dernier dans une position adéquate par rapport au nœud ou clé qu'il forme dans l'interface de liaison, ce qui évite le desserrage de ce nœud ou clé.

Alternativement, selon une autre caractéristique de l'invention, le câble est engagé transversalement dans le creux que forme la première branche coudée en laissant subsister au-delà dudit creux, un brin mort de faible longueur, entoure la première branche rectiligne terminale, est ramené dans le creux formé par la première branche coudée et est engagé dans la queue de contention.

Selon une autre caractéristique de l'invention, que le câble présente à l'une de ses extrémités une surépaisseur annulaire d'un diamètre supérieur à la largeur du creux que forme la première branche coudée et est maintenu dans ledit creux par ladite surépaisseur annulaire, laquelle est apte à céder sous l'effet d'un effort de traction d'intensité prédéterminé exercé sur ledit câble.

### Bref exposé des figures et des dessins

D'autres avantages, buts et caractéristiques de la présente invention, apparaîtront à la lecture de la description d'au moins une forme préférée de réalisation, donnée à titre d'exemple non limitatif en se référant aux dessins annexés.
La Fig.1 montre un crochet selon une première forme de réalisation, dans un état ouvert,
La Fig.2 montre un crochet selon la première forme de réalisation dans un état fermé,
La Fig.3 est une vue d'un tendeur montrant une étape de montage du câble élastique dans un crochet,
La Fig.4 est une vue d'un tendeur selon l'invention montrant le câble élastique de ce dernier fixé à l'interface de liaison que comporte le crochet,
La Fig.5] est une partielle d'un crochet montrant une variante de réalisation de la fixation du câble à l'interface de liaison,
La Fig.6 est vue d'un crochet selon une seconde forme de réalisation.

### Description d'un mode de réalisation de l'invention

Tel que représenté, le crochet 1 selon l'invention, est prévu pour être accroché à un objet quelconque et est prévu pour recevoir un câble élastique 20. Ce crochet 1, élastiquement déformable est formé par pliage d'un fil métallique, par exemple un fil d'acier à haute limite élastique protégé de la corrosion, de section droite circulaire par exemple et d'un diamètre de 3 mm. Il va de soi que cette valeur n'est donnée qu'à titre purement indicatif et qu'elle ne saurait limiter l'invention. Le crochet pourra être réalisé par un fil d'acier inoxydable ou bien, après fabrication, pourra recevoir un traitement anticorrosion approprié. Ce traitement anticorrosion pourra être réalisé avant ou après fabrication du crochet, par galvanisation par exemple.

Comme on peut le voir aux figures jointes, le crochet 1, selon l'invention, comprend d'une part une interface de liaison 10 prévue pour recevoir en fixation de manière amovible l'une des zones terminales d'un câble élastique 20 et, d'autre part, en avant de l'interface de liaison 10, une boucle d'accrochage 11, élastique, formant mousqueton de préférence, prévue pour être accrochée à un objet, un support et autre. Comme on peut le voir, l'interface de liaison 10 et la boucle d'accrochage 11 se prolongent mutuellement.

La boucle d'accrochage 11 comprend une branche basale 12 prolongeant l'interface de liaison 10 et une branche arquée 110, dont la concavité est tournée vers la branche basale 12 et dont la zone terminale libre forme la zone terminale libre de ladite boucle. Comme on peut le voir, cette branche arquée 110, en combinaison avec la branche basale 12, détermine une anse 13 prévue pour recevoir un objet, non représenté, auquel le crochet 1 sera solidarisé.

Les branches basale 12 et arquée 110 se rejoignent en extrémité avant de la boucle d'accrochage 11 et forment à ce niveau, un nez arrondi 11a de boucle d'accrochage. Ce nez 11a de boucle, sous l'effet d'un effort de traction exercé par le câble 20 équipant le crochet 1, est amené contre l'objet auquel ledit crochet 1 est fixé par sa boucle d'accrochage 11.

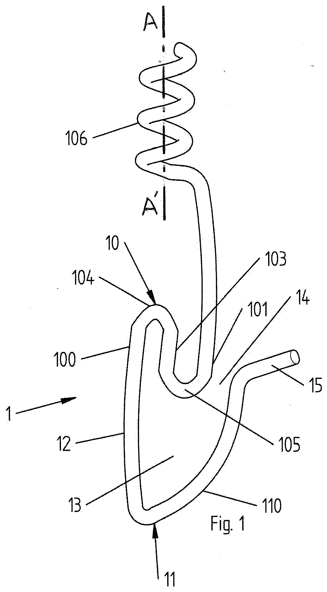

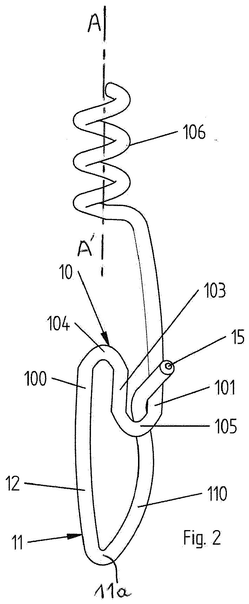

L'anse 13 présente une ouverture 14 formée entre l'interface de liaison 10 et la branche basale 12. Préférentiellement, cette ouverture 14 est obturable. À cet effet est prévu un fermoir 15, lequel, selon une première forme de réalisation du crochet 1 (Fig.1 et 2), est conçu apte à être engagé dans l'interface de liaison 10 pour refermer l'ouverture 14.

La fermeture ou l'ouverture de l'anse 13 est opérée par déformation élastique de la boucle 11 ce qui permet de dégager le fermoir 15 de l'interface de liaison ou de l'engager dans cette dernière. Ce fermoir 15 est ménagé en zone terminale libre de la boucle 11, c'est-à-dire en extrémité libre de la branche arquée 110. Avantageusement, le fermoir 15 selon la première forme de réalisation du crochet 1, est réalisé par pliage selon un angle vif de préférence, de la zone terminale de la branche arquée 110. Ce fermoir se présente sous la forme d'un bec d'accrochage de préférence rectiligne. Ce bec d'accrochage se développe de manière oblique par rapport au plan géométrique selon lequel se développe la boucle d'accrochage 11.

Comme on peut le voir sur les figures jointes, l'interface de liaison 10 épouse de préférence substantiellement la forme d'un S, et présente une première 100 et une seconde 101 branches terminales rectilignes, ainsi qu'une branche médiane rectiligne 103. Cette branche médiane 103 est liée à la première branche terminale rectiligne 100 par une première branche coudée 104 et à la seconde branche rectiligne 101 par une seconde branche coudée 105. L'interface de liaison 10, telle que décrite, est formée en sorte que les branches rectilignes terminales et médiane soient parallèles les unes aux autres et parallèles à la direction de l'effort de traction que devra encaisser tant la boucle d'accrochage 11 que l'interface de liaison 10 du fait de l'action du câble élastique. La première branche rectiligne 100 est prolongée axialement par la branche basale 12 de la boucle d'accrochage 11. La seconde branche rectiligne terminale 101 et la branche médiane rectiligne 103 sont situées dans l'intervalle entre les branches basale 12 et arquées 110.

Les branches coudées 104, 105 forment deux creux opposés, de largeur égale ou inférieure au diamètre du câble élastique prévu pour être fixé à l'interface de liaison 10. La première branche coudée 104 détermine un creux orienté vers l'anse 13, c'est-à-dire vers l'avant du crochet 1. Ce creux est en relation de communication avec cette dernière. Cette première branche coudée 104 et le creux qu'elle forme sont prévus pour recevoir en fixation le câble élastique. Le creux que détermine la seconde branche coudée 105 est prévu pour recevoir le fermoir 15, selon la première forme de réalisation du crochet 1.

Le bec d'accrochage que forme le fermoir 15, selon la première forme de réalisation du crochet pourra être replié et former un U d'accrochage afin de pouvoir être engagé par le creux du U autour de la branche coudée 105 en position de fermeture de la boucle 11.

Préférentiellement, la boucle d'accrochage 11 et l'interface de liaison 10 sont formées selon un même plan géométrique, mais en variante, elles seront formées selon deux plans géométriques distincts. De même, l'interface de liaison 10 pourra être formée selon deux plans géométriques sécants. L'un de ces deux plans contiendra les axes géométriques longitudinaux de la première branche terminale rectiligne 100 et de la branche médiane rectiligne 103 tandis que le second plan contiendra les axes géométriques longitudinaux de la branche médiane 103 et de la seconde branche terminale 101.

Selon les deux formes de réalisation du crochet, la seconde branche terminale rectiligne 101 de l'interface de liaison 10 est prolongée vers l'arrière du crochet 1 par une queue de contention 106 prévue pour recevoir le câble élastique 20. Cette queue de contention 106 présente un axe géométrique longitudinal AA', parallèle aux branches rectilignes terminales et médiane 100, 101 et 103 et préférentiellement sécant au nez 11a de boucle d'accrochage et notamment lorsque ladite bouche d'accrochage 11 est fermée. Selon la première forme de réalisation du crochet 1, cet axe AA' est également sécant à la première branche coudée 104. Selon la seconde forme de réalisation, cet axe AA' est sécant à la seconde branche coudée 105.

De préférence, la queue de contention 106, selon les deux formes de réalisation du crochet 1, présente une succession de spires non jointives, déterminant un logement prévu pour recevoir un câble élastique 20, l'axe géométrique de révolution des dites spires formant l'axe géométrique longitudinal AA' de ladite queue de contention 106. L'espacement entre deux spires successives sera égal ou légèrement supérieur au diamètre du câble 20 prévu pour équiper le crochet 1 selon l'invention. Cette disposition permet de faciliter l'introduction de ce câble dans le logement axial que forme cette succession de spires non jointives. Cette introduction sera effectuée par mouvement d'enroulement du câble 20 autour de la queue de contention 106. Avantageusement le diamètre du logement est légèrement inférieur au diamètre de ce câble élastique afin de contraindre ce dernier dans ledit logement. Préférentiellement, le creux que forme la seconde branche coudée 105 est orienté vers la queue de contention. La forme en S donnée à l'interface de liaison apporte la souplesse nécessaire à la manipulation du crochet en ouverture et fermeture.

En figure 1, la boucle d'accrochage 11 que comporte le crochet 1 est représentée en position ouverte. On peut voir sur cette figure que le fermoir 15 est dégagé du creux que forme la deuxième branche coudée 105 et est écarté de l'interface de liaison 10 afin de laisser libre l'ouverture 14. La branche arquée 110 est sollicitée vers une position d'ouverture de la boucle 11 sous l'effet de son élasticité et plus généralement sous l'effet de l'élasticité de la boucle d'accrochage 11.

La figure 2 montre la boucle d'accrochage 11 du crochet 1 en position de fermeture. La fermeture est obtenue par déformation élastique de la boucle d'accrochage 11 et engagement du fermoir 15 dans le creux de la seconde branche coudée 105. De préférence, en position de fermeture, le fermoir 15, sous l'effet de l'élasticité de la boucle d'accrochage 11 et plus particulièrement de l'élasticité de la branche arquée 110, prend appui contre la seconde branche coudée 105. En raison de cette disposition, l'effort de traction appliqué sur la boucle d'accrochage 11 sera pour partie encaissé par le fermoir 15 et pour autre partie par la branche basale 12. Alternativement, le fermoir 15, en position de fermeture de la boucle 11, prendra appui contre la seconde branche terminale rectiligne 101 et viendra contre la branche terminale coudée 105 sous l'effet d'un effort de traction violent.

Il y a lieu de noter que l'interface de liaison 10 et la boucle 11 sont dimensionnées en sorte de pouvoir tenir dans la main d'un adulte, ce qui facilite la manipulation du crochet et en accroît son ergonomie.

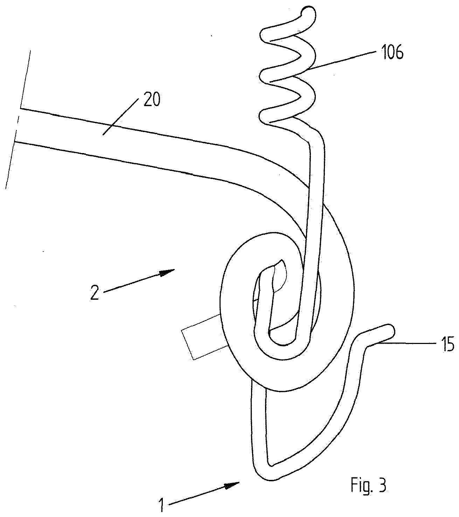

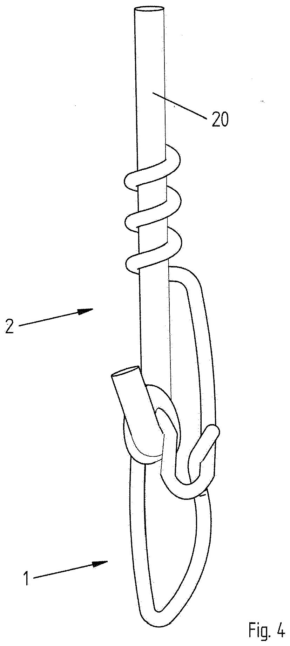

En figures 3 et 4 est représenté un tendeur élastique 2 formé d'un câble élastique 20 à chaque extrémité duquel est fixé par un nœud ou clé, un crochet 1 selon l'invention. La figure 3 illustre une des étapes de fixation du câble élastique 20 à l'interface de liaison 10. Comme on peut le voir sur cette figure, le câble 20 est engagé transversalement dans le creux que forme la première branche coudée 104 en laissant subsister au-delà dudit creux, un brin mort de faible longueur. Ensuite, ce câble 20 est engagé transversalement dans le creux que forme la seconde branche coudée 105 tout en entourant la branche médiane 103 ou la première branche rectiligne 100, est ramené dans le creux que forme la première branche coudée 104. Par la suite, comme le montre la figure 4, le câble 20 est engagé dans la queue de contention 106.

En figure 4, on peut remarquer que le nœud ou clé formé par le câble 20 par sa fixation à l'interface de liaison 10 forme une surépaisseur dans le creux que forme la seconde branche coudée 105. On peut remarquer sur cette figure que le fermoir 15, en position de fermeture de la boucle d'accrochage 10, est logé en léger serrage dans l'intervalle entre cette surépaisseur et la deuxième branche rectiligne 101. Ainsi, la surépaisseur que constitue le nœud que forme le câble 20 contribue au maintien du fermoir en position de fermeture. De plus, le fermoir 15 est en partie masqué par le nœud ou clé que forme le câble et ne pourra pour cette raison déchirer par son extrémité, la couverture ou le filet auquel le crochet serait fixé.

Alternativement, le câble 20 est engagé transversalement dans le creux que forme la première branche coudée 104 en laissant subsister au-delà dudit creux, un brin mort de faible longueur, entoure la première branche terminale rectiligne 100, est ramené dans le creux formé par la première branche coudée et est engagé dans la queue de contention 106.

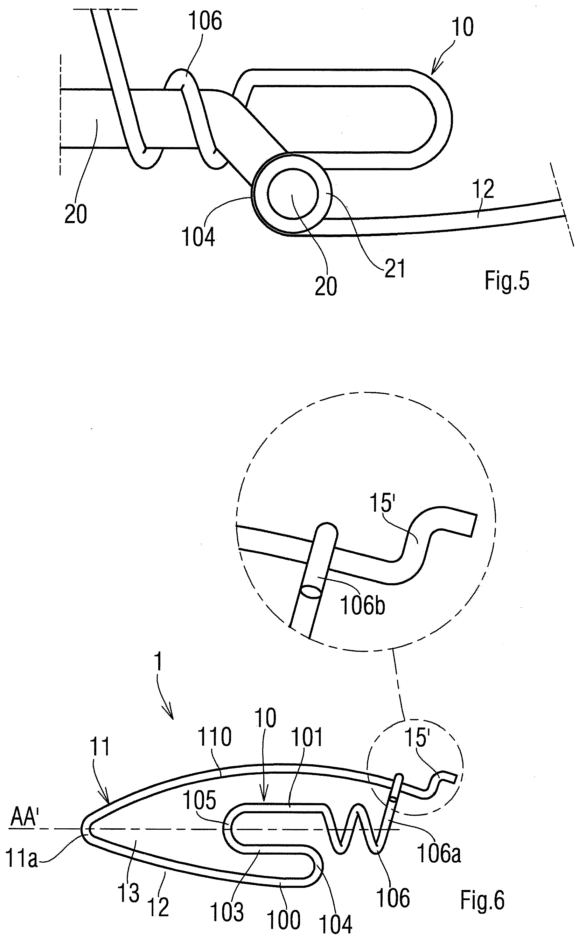

En variante, comme représenté en figure 5, le câble élastique 20 est toujours engagé dans la queue de contention 106 et est maintenu dans le creux que forme la première branche coudée 104 non plus par nouage, mais par une surépaisseur annulaire 21 ménagée à l'une des deux extrémités du câble 20. Cette surépaisseur est formée de préférence par un anneau métallique apposé par sertissage sur le câble 20 en entourant ladite extrémité et conçu apte à céder sous l'effet d'un effort de traction important, d'intensité prédéterminée, exercé sur le câble 20. Avantageusement, l'anneau métallique est formé par une agrafe. Comme on le comprend, le diamètre de l'anneau élastique sera supérieur à la largeur du creux formé par la première branche coudée 104. On comprend également que sous l'effet de l'effort de traction appliqué au câble 20, l'anneau élastique sera fermement appliqué contre la branche coudée 104.

Une telle disposition s'avère particulièrement utile dans les situations selon lesquelles l'élément attaché au tendeur doit être préservé de contraintes mécaniques trop importantes. C'est notamment le cas des couvertures de protection des vergers s'étendant au-dessus des plantations et fixées à des poteaux par des tendeurs et qui ne peuvent supporter des charges pondérales importantes telles que celles dues au poids de la neige, de la grêle ou de la pluie.

En figure 6 est représenté un crochet 1 selon une autre forme de réalisation. La fixation du câble 20 à ce crochet est réalisée comme décrit précédemment soit par nouage, soit par une surépaisseur annulaire ménagée en extrémité de ce câble.

Selon cette forme de réalisation, la branche arquée 110 de la boucle d'accrochage 11 est prolongée vers l'arrière, au-delà de l'interface de liaison 10 et de la queue de contention 106 pour coopérer en fermeture de la boucle d'accrochage 11, avec ladite queue de contention 106. Selon cette forme de réalisation, la queue de contention 106 présente à l'opposé de l'interface de liaison 10 une zone terminale libre 106a se développant selon un plan géométrique normal ou oblique par rapport à l'axe géométrique longitudinal AA', et comportant en extrémité un bec de rétention 106b courbé en U, dont la concavité est orientée vers la branche arquée 110, ledit bec de rétention 106b étant prévu pour recevoir la branche arquée 110 en position de fermeture de la boucle d'accrochage 11. La fermeture de la boucle d'accrochage 11 est opérée par engagement de la branche arquée 110 dans le bec de rétention 106b, cet engagement étant effectué sous l'effet des forces élastiques internes de cette branche arquée 110 et cette dernière est maintenue dans ce bec 106b sous l'effet de ces mêmes forces.

La zone terminale libre de la branche arquée 110 est dotée d'un fermoir 15'. Ce fermoir 15' lorsque la branche arquée 110 est engagée dans le bec de rétention 106b, est situé en arrière et à écartement de ce bec de rétention106b, à l'extérieur de l'anse que forme la boucle d'accrochage 11. À titre d'exemple purement indicatif, cette distance est égale à 5mm. Cette disposition créée une réserve de longueur entre le fermoir 15' et le bec de rétention 106b afin d'autoriser le libre déplacement axial de la branche arquée 110, par rapport à ce bec de rétention, sous l'effet de la déformation élastique du crochet 1 lorsque ce dernier est soumis à des efforts de traction. Comme on le comprend, le degré de déformation élastique du crochet 1 est proportionnel à l'intensité des efforts de traction qu'il encaisse tant du câble que de l'objet auquel il est attaché. On comprend également que la valeur du déplacement de la branche arquée 110 par rapport au bec de rétention 106b dépend de l'intensité de ces efforts. Ainsi, le crochet 1 pourra encaisser des efforts ponctuellement élevés sans risque que le fermoir 15' vienne en butée contre le bec de rétention 106b ce qui pourrait engendrer accidentellement sur la branche arquée 110 des efforts la sollicitant vers la position d'ouverture de la boucle d'accrochage 11.

De préférence, le fermoir 15' est formé par une patte obtenue par pliage à angle droit, vers l'extérieur de la boucle 11, de la zone terminale de la branche arquée 110. Avantageusement, cette patte est prolongée à angle droit, vers l'arrière, par une seconde patte s'étendant vers l'arrière du crochet.

Selon cette seconde forme de réalisation, l'axe longitudinal AA' est contenu dans un plan géométrique contenant les axes médians longitudinaux des branches basale 12 et arquée 110, et l'interface de liaison 10 se développe selon un plan géométrique oblique par rapport au plan géométrique selon lequel se développent les axes médians longitudinaux des branches basale 12 et arquée 110. L'axe longitudinal AA' est toujours sécant au nez 11a de boucle.

### Avantages de l'invention

Le crochet tel que décrit présente l'avantage de permettre une fixation rapide et sûre du câble élastique 20 et ce sans utilisation d'organes annexes tels qu'agrafes et autres. Il permet une modification rapide et simple de la longueur utile du câble élastique ainsi que le changement de ce dernier. Il peut donc être réutilisé avec un nouveau câble. Est évitée ainsi la mise au rébus d'un crochet encore utilisable.

Le crochet tel que décrit est aisément verrouillable et est difficilement déverrouillable sans l'intervention de l'utilisateur. La sécurité d'utilisation que confère ce crochet s'en trouve significativement accrue.

Enfin, le crochet tel que décrit peut équiper tout type de câble ou corde élastique ou non élastique.

Il va de soi que la présente invention peut recevoir tous aménagements et variantes du domaine des équivalents techniques sans pour autant sortir du cadre du présent brevet tel que défini par les revendications ci-après.

## Revendications

1. Crochet (1) pour tendeur élastique, réalisé par pliage d'un élément filaire métallique, de section adaptée, présentant d'une part, une interface de liaison (10) prévue pour recevoir en fixation de manière amovible l'une des zones terminales d'un câble élastique (20), et, d'autre part, une boucle d'accrochage (11) prévue pour être accrochée à un objet, ladite boucle (11) possédant une zone terminale libre et déterminant une anse (13) prévue pour recevoir ledit objet par passage au travers d'une ouverture (14), l'interface de liaison (10) présentant une première (100) et une seconde (101) branches terminales rectilignes et une branche médiane rectiligne (103), liée à la première branche terminale rectiligne (100) par une première branche coudée (104) et à la seconde branche rectiligne (101) par une seconde branche coudée (105), lesdites branches coudées (104, 105) formant deux creux opposés, les dites branches rectilignes terminales (100, 101) et médiane (103) étant parallèles à la direction de l'effort de traction que devra encaisser tant la boucle (11) que l'interface de liaison (10) du fait de l'action du câble élastique (20), la première branche terminale rectiligne (100) étant prolongée par la boucle d'accrochage (11), et la première branche coudée (104), déterminant un creux orienté vers l'anse (13), en relation de communication avec cette dernière, ladite première branche coudée (104) et le creux qu'elle forme étant prévus pour recevoir en fixation le câble élastique ***caractérisé* en ce que** la largeur du creux formé par au moins la première branche coudée (104) est égale ou inférieure au diamètre du câble (20) prévu pour être fixé à l'interface de liaison (10) et que la seconde branche terminale rectiligne (101) est prolongée par une queue de contention (106) prévue pour recevoir le câble élastique (20), ladite queue de contention (106) présentant un axe géométrique longitudinal AA', parallèle aux branches rectilignes terminales (100, 101) et médiane (103).

2. Crochet (1) selon la revendication précédente, ***caractérisé* en ce que** l'interface de liaison forme un S.

3. Crochet (1) selon la revendication 1 ou la revendication 2, ***caractérisé* en ce que** la queue de contention (106) présente une succession de spires non jointives, déterminant un logement prévu pour recevoir le câble élastique (20), l'axe géométrique de révolution des dites spires formant l'axe longitudinal AA' de ladite queue de contention (106).

4. Crochet (1) selon la revendication précédente, ***caractérisé* en ce que** l'espacement entre deux spires successives est égal ou légèrement supérieur au diamètre du câble élastique (20) et que le diamètre du logement est inférieur au diamètre de ce câble élastique afin de contraindre ce dernier dans ledit logement.

5. Crochet (1) selon l'une quelconque des revendications précédentes, ***caractérisé* en ce que** la boucle d'accrochage (11) comporte une branche basale (12) prolongeant la première branche rectiligne (100) de l'interface de liaison (10) et que la zone terminale libre de la boucle (11) est agencée en fermoir (15, 15').

6. Crochet (1) selon la revendication précédente, ***caractérisé* en ce que** l'ouverture (14) de l'anse (13) de la boucle est refermée par blocage du fermoir (15) dans le creux que forme la seconde branche coudée (105).

7. Crochet (1) selon la revendication 5 ou la revendication 6, ***caractérisé* en ce que** la boucle d'accrochage (11) comprend une branche arquée élastique (110), dont la concavité est tournée vers la branche basale (12), que cette branche arquée détermine avec la branche basale (12), l'anse (13) de ladite boucle et que la zone terminale libre de la branche arquée (110) forme la zone terminale libre de ladite boucle (11) et est agencée en fermoir (15, 15').

8. Crochet (1) selon l'une quelconque des revendications 5 à 7, ***caractérisé* en ce que** le fermoir (15) est conformé en bec d'accrochage.

9. Crochet (1) selon la revendication 7, ***caractérisé* en ce que** la branche arquée (110) de la boucle d'accrochage (11) est prolongée vers l'arrière, au-delà de l'interface de liaison (10) et de la queue de contention (106) et coopère en fermeture de la boucle d'accrochage (11), avec ladite queue de contention (106).

10. Crochet (1) selon la revendication précédente, ***caractérisé* en ce que** la queue de contention (106) présente à l'opposé de l'interface de liaison (10) une zone terminale libre (106a) se développant selon un plan géométrique normal ou oblique par rapport à l'axe géométrique longitudinal AA', et comportant en extrémité un bec de rétention (106b) courbé en U, dont la concavité est orientée vers la branche arquée (110), ledit bec de rétention (106b) étant prévu pour recevoir la branche arquée (110) en position de fermeture de la boucle d'accrochage (11).

11. Crochet (1) selon la revendication précédente, ***caractérisé* en ce que** le fermoir (15'), ménagé en extrémité de la branche arquée (110), est situé en arrière et à écartement de ce bec (106b), lorsque la branche arquée (110) est engagée dans ce dit bec de rétention (106b).

12. Tendeur (2) comportant un câble élastique (20) ***caractérisé* en ce que** ledit câble (20) est équipé d'au moins un crochet (1) selon les revendications précédentes prises dans leur ensemble.

13. Tendeur (2) selon la revendication précédente, ***caractérisé* en ce que** le câble (20) est engagé transversalement dans le creux que forme la première branche coudée (104) en laissant subsister au-delà dudit creux, un brin mort de faible longueur, puis est engagé transversalement dans le creux que forme la seconde branche coudée (105) tout en entourant la branche médiane (103) ou la première branche rectiligne terminale (100), est ramené dans le creux que forme la première branche coudée (104) et est ensuite engagé dans la queue de contention (106).

14. Tendeur (2) selon la revendication 12, ***caractérisé* en ce que** le câble (20) est engagé transversalement dans le creux que forme la première branche coudée (104) en laissant subsister au-delà dudit creux, un brin mort de faible longueur, entoure la première branche rectiligne terminale (100), est ramené dans le creux formé par la première branche coudée et est engagé dans la queue de contention (106).

15. Tendeur (2) selon la revendication 12, ***caractérisé* en ce que** le câble (20) présente à l'une de ses extrémités une surépaisseur annulaire (21) d'un diamètre supérieur à la largeur du creux que forme la première branche coudée (104) et est maintenu dans ledit creux par ladite surépaisseur annulaire (21), laquelle est apte à céder sous l'effet d'un effort de traction d'intensité prédéterminé exercé sur ledit câble (20).

## Patentansprüche

1. Haken (1) für einen elastischen Spanner, hergestellt durch Biegen eines Metalldrahtelements mit geeignetem Querschnitt, welches einerseits eine Verbindungsfläche (10), die dazu bestimmt ist, einen der endständigen Bereiche eines elastischen Seils (20) lösbar zum Zwecke der Befestigung aufzunehmen, und andererseits eine Einhängeschlaufe (11) aufweist, die dazu bestimmt ist, an einem Gegenstand eingehängt zu werden, wobei die Schlaufe (11) einen endständigen Bereich besitzt, der frei ist und einen Durchlass (13) begrenzt, welcher dazu bestimmt ist, den Gegenstand derart aufzunehmen, dass dieser durch eine Öffnung (14) geführt wird, wobei die Verbindungsfläche (10) einen ersten (100) und einen zweiten (101) geradlinigen endständigen Schenkel sowie einen geradlinigen mittigen Schenkel (103) aufweist, welcher über einen ersten gekrümmten Schenkel (104) mit dem ersten geradlinigen endständigen Schenkel (100) und über einen zweiten gekrümmten Schenkel (105) mit dem zweiten geradlinigen endständigen Schenkel (101) verbunden ist, wobei die gekrümmten Schenkel (104, 105) zwei entgegengesetzte Hohlräume bilden, wobei die geradlinigen Schenkel endständiger Art (100, 101) und mittiger Art (103) parallel zur Richtung der Zugkraft sind, welcher sowohl die Schlaufe (11) als auch die Verbindungsfläche (10) aufgrund der Einwirkung des elastischen Seils (20) ausgesetzt werden sein, wobei der erste geradlinige Schenkel (100) durch die Einhängeschlaufe (11) verlängert wird und wobei der erste gekrümmte Schenkel (104) einen Hohlraum begrenzt, welcher zum Durchlass (13) hin ausgerichtet ist und mit letzterem in Verbindung steht, wobei der erste gekrümmte Schenkel (104) und der Hohlraum, welchen dieser bildet, dazu bestimmt sind, das elastische Seil zum Zwecke der Befestigung aufzunehmen, **dadurch *gekennzeichnet,* dass** die Breite des Hohlraums, welcher zumindest von dem ersten gekrümmten Schenkel (104) gebildet wird, höchsten dem Durchmesser des Seils (20) entspricht, welches dazu bestimmt ist, an der Verbindungsfläche (10) befestigt zu werden, und dass der zweite geradlinige endständige Schenkel (101) durch einen Haltefortsatz (106) verlängert wird, welcher dazu bestimmt ist, das elastische Seil (20) aufzunehmen, wobei der Haltefortsatz (106) eine geometrische Längsachse AA' aufweist, die parallel zu den geradlinigen Schenkeln endständiger Art (100, 101) und mittiger Art (103) ist.

2. Haken (1) nach dem vorhergehenden Anspruch, **dadurch *gekennzeichnet,* dass** die Verbindungsfläche ein S bildet.

3. Haken (1) nach Anspruch 1 oder Anspruch 2, **dadurch *gekennzeichnet,* dass** der Haltefortsatz (106) eine Abfolge von beabstandeten Windungen aufweist, die eine Aussparung begrenzen, welche dazu bestimmt ist, das elastische Seil (20) aufzunehmen, wobei die geometrische Drehachse der Windungen die Längsachse AA' des Haltefortsatzes (106) bildet.

4. Haken (1) nach dem vorhergehenden Anspruch, **dadurch *gekennzeichnet,* dass** der Abstand zwischen zwei aufeinanderfolgenden Windungen gleich dem Durchmesser des elastischen Seils (20) oder etwas größer als dieser ist und dass der Durchmesser der Aussparung kleiner als der Durchmesser dieses elastischen Seils ist, um letzteres in dieser Aussparung festzuhalten.

5. Haken (1) nach einem beliebigen der vorhergehenden Ansprüche, **dadurch *gekennzeichnet,* dass** die Einhängeschlaufe (11) einen Basisschenkel (12) aufweist, der den ersten geradlinigen Schenkel (100) der Verbindungsfläche (10) verlängert und dass der freie endständige Bereich der Schlaufe (11) als Schließorgan (15, 15') ausgestaltet ist.

6. Haken (1) nach dem vorhergehenden Anspruch, **dadurch *gekennzeichnet,* dass** die Öffnung (14) des Durchlasses (13) der Schlaufe wieder geschlossen wird, indem das Schließorgan (15) in dem Hohlraum blockiert wird, welchen der zweite gekrümmte Schenkel (105) bildet.

7. Haken (1) nach Anspruch 5 oder Anspruch 6, **dadurch *gekennzeichnet,* dass** die Einhängeschlaufe (11) einen elastischen bogenförmigen Schenkel (110) umfasst, dessen konkave Seite dem Basisschenkel (12) zugewandt ist, dass dieser bogenförmige Schenkel, zusammen mit dem Basisschenkel (12), den Durchlass (13) der Schlaufe begrenzt und dass der freie endständige Bereich des bogenförmigen Schenkels (110) den freien endständigen Bereich der Schlaufe (11) bildet und als Schließorgan (15, 15') ausgestaltet ist.

8. Haken (1) nach einem beliebigen der Ansprüche 5 bis 7, **dadurch *gekennzeichnet,* dass** das Schließorgan (15) in Form einer Einhängenase ausgeführt ist.

9. Haken (1) nach Anspruch 7, **dadurch gekennzeichnet, dass** der bogenförmige Schenkel (110) der Einhängeschlaufe (11) rückseitig verlängert ist, über die Verbindungsfläche (10) und den Haltefortsatz (106) hinaus, wobei er derart mit dem Haltefortsatz (106) zusammenwirkt, dass die Einhängeschlaufe (11) geschlossen wird.

10. Haken (1) nach dem vorhergehenden Anspruch, **dadurch gekennzeichnet, dass** der Haltefortsatz (106) auf der Seite, welche der Verbindungsfläche (10) entgegengesetzt ist, einen freien endständigen Bereich (106a) aufweist, wobei dieser sich in einer geometrischen Ebene erstreckt, die normal oder geneigt zur geometrischen Längsachse AA' ist, und endständig eine U-förmig gekrümmte Festhaltenase (106b) aufweist, deren konkave Seite dem bogenförmigen Schenkel (110) zugewandt ist, wobei die Festhaltenase (106b) dazu bestimmt ist, den bogenförmigen Schenkel (110) aufzunehmen, wenn die Einhängeschlaufe (11) ihre Schließposition einnimmt.

11. Haken (1) nach dem vorhergehenden Anspruch, **dadurch *gekennzeichnet,* dass** das Schließorgan (15'), welches endständig an dem bogenförmigen Schenkel (110) angebracht ist, sich rückseitig der Nase (106b) und von dieser beabstandet befindet, wenn der bogenförmige Schenkel (110) in diese Festhaltenase (106b) eingreift.

12. Spanner (2), der ein elastisches Seil (20) aufweist (20), **dadurch *gekennzeichnet,* dass** das Seil (20) mit mindestens einem Haken (1) gemäß den vorhergehenden Ansprüchen, in ihrer Gesamtheit betrachtet, ausgestattet ist.

13. Spanner (2) nach dem vorhergehenden Anspruch, **dadurch *gekennzeichnet,* dass** das Seil (20) in Querrichtung durch den Hohlraum geführt ist, welchen der erste gekrümmte Schenkel (104) bildet, wobei jenseits des Hohlraums ein Totstück von geringer Länge verbleibt, es in Querrichtung durch den Hohlraum geführt ist, welchen der zweite gekrümmte Schenkel (105) bildet, wobei es um den mittigen Schenkel (103) oder den ersten geradlinigen endständigen Schenkel (100) herumläuft, in den Hohlraum zurückgeführt ist, welchen der erste gekrümmte Schenkel (104) bildet, und anschließend im Haltefortsatz (106) steckt.

14. Spanner (2) nach Anspruch 12, **dadurch *gekennzeichnet,* dass** das Seil (20) in Querrichtung durch den Hohlraum geführt ist, welchen der erste gekrümmte Schenkel (104) bildet, wobei jenseits des Hohlraums ein Totstück von geringer Länge verbleibt, es um den ersten geradlinigen endständigen Schenkel (100) herumläuft, in den Hohlraum zurückgeführt ist, welchen der erste gekrümmte Schenkel bildet, und im Haltefortsatz (106) steckt.

15. Spanner (2) nach Anspruch 12, **dadurch gekennzeichnet, dass** das Seil (20) an einem seiner Enden eine ringförmige Verdickung (21) aufweist, deren Durchmesser größer als die Breite des Hohlraums ist, welchen der erste gekrümmte Schenkel (104) bildet, und es durch die ringförmige Verdickung (21) in diesem Hohlraum gehalten wird, wobei diese dazu befähigt ist nachzugeben, wenn eine Zugkraft von vorbestimmter Intensität auf das Seil (20) einwirkt.

## Claims

1. Hook (1) for elastic tensioner, made by folding a metal wire element, of suitable cross-section, having on the one hand a connecting interface (10) intended to receive one of the end zones of an elastic cable (20) which is detachably attached, and on the other hand a hooking loop (11) intended to be hooked to an object, said loop (11) having a free end zone and defining a cove (13) intended to receive said object by passing through an opening (14), the connecting interface (10) having a first (100) and a second (101) rectilinear terminal branch and a rectilinear middle branch (103), connected to the first rectilinear terminal branch (100) by a first bent branch (104) and to the second rectilinear branch (101) by a second bent branch (105), said bent branches (104, 105) forming two opposite hollows, said terminal (100, 101) and middle (103) rectilinear branches being parallel to the direction of the tensile force to be absorbed both by the loop (11) and by the connecting interface (10) due to the action of the elastic cable (20), the first rectilinear terminal branch (100) being extended by the hooking loop (11), and the first bent branch (104), defining a hollow oriented towards the cove (13), in communication relation with the latter, the said first bent branch (104) and the hollow it forms being intended to receive the elastic cable attached, ***characterized* in that** the width of the hollow formed by at least the first bent branch (104) is equal to or less than the diameter of the cable (20) intended to be attached to the connecting interface (10) and **in that** the second rectilinear terminal branch (101) is extended by a retainer shank (106) intended to receive the elastic cable (20), the said retainer shank (106) having a longitudinal geometric axis AA', parallel to the terminal (100, 101) and middle (103) rectilinear branches.

2. Hook (1) according to the preceding claim, ***characterized* in that** the connecting interface forms an S.

3. Hook (1) according to claim 1 or claim 2, ***characterized* in that** the retainer shank (106) comprises a succession of non-contiguous turns, determining a housing intended to receive the elastic cable (20), the geometric axis of revolution of said turns forming the longitudinal axis AA' of said retainer shank (106).

4. Hook (1) according to the preceding claim, ***characterized* in that** the gap between two successive turns is equal to or slightly greater than the diameter of the elastic cable (20) and **in that** the diameter of the housing is smaller than the diameter of this elastic cable in order to constrain the latter in said housing.

5. Hook (1) according to any one of the preceding claims, ***characterized* in that** the hooking loop (11) has a basal branch (12) which extends the first rectilinear branch (100) of the connecting interface (10), and **in that** the free end zone of the loop (11) is arranged as a clasp (15, 15').

6. Hook (1) according to the preceding claim, ***characterized* in that** the opening (14) of the cove (13) of the loop is closed by locking the closure (15) in the hollow formed by the second bent branch (105).

7. Hook(1) according to claim 5 or 6, ***characterized* in that** the hooking loop (11) comprises an elastic arcuate branch (110), the concavity of which is turned towards the basal branch (12), **in that** this arcuate branch determines with the basal branch (12) the cove (13) of said loop, and **in that** the free end zone of the arcuate branch (110) forms the free end zone of said loop (11) and is arranged as a clasp (15, 15').

8. Hook (1) according to any one of Claims 5 to 7, ***characterized* in that** the clasp (15) is shaped as a hooking beak.

9. Hook (1) according to Claim 7, ***characterized* in that** the arcuate branch (110) of the hooking loop (11) is extended rearwards beyond the connecting interface (10) and the retainer shank (106) and cooperates, by closing the hooking loop (11), with said retainer shank (106).

10. Hook (1) according to the preceding claim, ***characterised* in that** the retainer shank (106) comprises, facing away from the connecting interface (10), a free end zone (106a) extending along a normal or inclined geometrical plane with respect to the longitudinal geometrical axis AA', and comprising at the end a U-shaped curved retention beak(106b), the concavity of which is oriented towards the arcuate branch (110), said retention beak (106b) being provided to receive the arcuate branch (110) in the closed position of the hooking loop (11).

11. Hook (1) according to the preceding claim, ***characterized* in that** the clasp (15'), arranged at the end of the arcuate branch (110), is located behind and at a distance from this beak (106b), when the arcuate branch (110) is engaged in said retention beak (106b).

12. Tensioner (2) comprising an elastic cable (20) ***characterized* in that** said cable (20) is provided with at least one hook (1) according to all the preceding claims.

13. Tensioner (2) according to the preceding claim, ***characterized* in that** the cable (20) is transversely engaged in the hollow formed by the first bent branch (104), leaving a short dead strand remaining beyond said hollow, then is transversely engaged in the hollow formed by the second bent branch (105), while surrounding the middle branch (103) or the first end rectilinear branch (100), is brought back into the hollow formed by the first bent branch (104) and is then engaged in the retainer shank (106).

14. Tensioner (2) according to claim 12, ***characterized* in that** the cable (20) is transversely engaged in the hollow formed by the first bent branch (104), leaving a short dead strand remaining beyond said hollow, surrounds the first end rectilinear branch (100), is brought back into the hollow formed by the first bent branch and is engaged in the retainer shank (106).

15. Tensioner (2) according to claim 12, ***characterized* in that** the cable (20) has at one of its ends an annular extra thickness (21) with a diameter greater than the width of the hollow formed by the first bent branch (104) and is held in said hollow by said annular extra thickness (21), which is capable of breaking as a result of a tensile force of predetermined intensity exerted on said cable (20).
